# EUROPEAN PATENT SPECIFICATION

(11) **EP 2 363 188 B1**
(45) Date of publication and mention of the grant of the patent: **08.11.2017**
(21) Application number: 09816461.9
(22) Date of filing: 25.09.2009
(51) Int. Cl.: C02F 1/68, C02F 103/02

(54) **WATER PURIFIER COMPRISING AN EVAPORATOR AND AN PURIFIED WATER HEAT EXCHANGER IN AN ICE STORAGE TANK**
WASSERREINIGUNGSGERÄT UMFASSEND EINEN VERDAMPFER UND EINEN WÄRMETAUSCHER FÜR GEREINIGTES WASSER IN EINEM EISTANK
PURIFICATEUR D'EAU COMPORTANT UN ÉVAPORATEUR ET UN ÉCHANGEUR DE CHALEUR POUR DE L'EAU PURIFIÉE DANS UNE CUVE À GLACE

(30) Priority: 26.09.2008 KR 20080094555; 16.01.2009 KR 20090003782
(43) Date of publication of application: 07.09.2011
(73) Proprietor: Woongjin Coway Co., Ltd., Choongcheongnam-do 314-895 (KR)
(72) Inventor: AHN, Kyu-Seob, Seoul 121-040 (KR); LEE, Eung-Sam, Seoul 151-818 (KR); NOH, Jin-Hwan, Seoul 151-818 (KR); KO, Soung-Woo, Cheongju Chungbuk 361-798 (KR); KIM, Jeong-Yeon, Seoul 151-818 (KR)
(74) Representative: Nederlandsch Octrooibureau
(86) International application number: PCT/KR2009/005507
(87) International publication number: WO 2010/036068

(56) References cited:
- EP-A1- 0 320 262
- EP-A2- 1 826 171
- GB-A- 2 163 727
- KR-A- 20060 129 579
- KR-B1- 100 439 730
- KR-B1- 100 583 404
- KR-B1- 100 594 490
- KR-B1- 100 735 914

## Description

### BACKGROUND OF THE INVENTION

### Field of the Invention

The present invention relates to a water purifier capable of providing functional water, such as carbonated water, oxygenized water, and the like, fit for drinking, and a control method thereof.

### Description of the Related Art

In general, a water purifier is a device for purifying source water (or raw water) such as tap water or mineral water, in order to eliminate heavy metals or hazardous substances contained in the raw water, based on a purifying method including precipitation, filtering, sterilization, or the like, to thus provide drinkable water containing only substances advantageous for human bodies.

Recently, a functional water purifier providing purified water containing a functional gas such as carbonic acid gas, oxygen, or the like, namely, drinkable functional water such as carbonated water, oxygenized water, and the like, as well as providing hot and cold purified water has emerged.

Carbonated water neutralizes stomach acid to improve inveterate (or confirmed) dyspepsia and lowers blood sugar levels, promotes digestion, and is effective for the treatment of skin diseases and eye troubles due to its sterilizing power. Also, by putting meat in carbonated water in the process of cooking the elimination of blood of meat may be accelerated and the smell of fat neutralized, while applying carbonated water to wheat flour dough causes an even generation of bubbles to improve the flavor of bread baked therefrom, and applying carbonated water to batter used for frying may make fried food crunchier.

In addition, oxygenized water may help reduce hangover symptoms, improve endurance and concentration, promote brain activity, provide cosmetic effects, and the like.

Additionally, carbonated water or oxygenized water provides a pleasant swallowing experience when a user drinks it, making the user feel fresh, while purified water tastes refreshing, increasing the quality of the drinking experience.

However, in the related art functional water purifier, a mixture tank, into which purified water and a functional gas are introduced to generate functional water having the functional gas dissolved therein, is actuated at room temperature, so dissolution of the functional gas is low, making it difficult to generate functional water having sufficient performance.

In addition, in order to generate both cold water and cold functional water, the related art functional water purifier requires separate cooling systems, increasing the fabrication costs and the volume.

Moreover, in the related art functional water purifier, the pressure in the interior of the mixture tank may be considerably increased due to the pressure of undissolved gas in the purified water, and the functional gas must be supplied to the mixture tank by a high pressure tank or a high pressure pump. Accordingly, in the configuration of the mixture tank, a gas flow line (i.e., a gas movement line, a gas transfer line, or the like) must be designed to endure relatively high pressures.

Furthermore, when the internal pressure of the mixture tank is high, neither the functional gas nor the purified water can be smoothly supplied to the interior of the mixture tank, resulting in a situation in which the gas and the purified water cannot be smoothly mixed in the interior of the mixture tank. Thus, the dissolution of the functional gas is lowered.

Document EP 0320262 A1 discloses a post-mix beverage dispensing system which comprises a cabinet which has top, front, back, side and bottom panels for housing various components. The various components include a carbonator (23) for producing carbonated water by mixing cooled water with CO₂. A cooling reservoir (22) cools potable water which is supplied to the carbonator (23) from a portable tank (27). The portable tank stores the potable water which is supplied to the carbonator and is easily detachable from the cabinet. A CO₂ tank (29) supplies CO₂ to the carbonator. A syrup package (51, 52, 53) dispenses a selected syrup. A first pipe (24) connects the portable tank with the carbonator and is arranged for cooling of the potable water by the cooled water in the cooling reservoir.

Document GB 2163727 A discloses a beverage dispensing device which has a cold beverage section (C) with a refrigerated cooling tank (40), and a hot beverage section (H). A hot brewed beverage may be delivered hot through a line (191) to a cup (21), or, after being cooled by heat exchange in a second cooling tank (30), through a line (201) to a cup (21). The second cooling tank (30) contains water which has passed through the first refrigerated tank (40), which contains the carbonator (45) and also chills the concentrate from (49).

### SUMMARY OF THE INVENTION

An aspect of the present invention provides a water purifier capable of simultaneously supplying cold water (purified cold water) and functional cold water such as cold carbonated water or cold oxygenized water, and a control method thereof.

Another aspect of the present invention provides a water purifier capable of providing cold water and cold functional water through a single cooling system, and a control method thereof.

Another object of the present invention provides a water purifier capable of stably providing a large quantity of cold water having a temperature lower than a predetermined temperature, and a control method thereof.

Another object of the present invention provides a water purifier capable of preventing a purified water heat exchanger accommodated in the interior of an ice storage tank from freezing and bursting, and a control method thereof.

Another object of the present invention provides a water purifier capable of lowering the pressure in the interior of a mixture tank when a functional gas is supplied thereto and improving the solubility (or dissolution rate) of a functional gas, and a control method thereof.

Another object of the present invention provides a water purifier having a mixture tank and a gas flow line designed to have a relatively low pressure, and a control method thereof.

Another object of the present invention provides a water purifier capable of supplying gas to a mixture tank without a driving source, and a control method thereof.

According to an aspect of the present invention, there is provided a water purifier according to claim 1, including: a water flow line (or a water movement line) allowing purified water to move therethrough; a gas storage unit storing gas; a gas flow line (or a gas movement line) allowing the gas to flow from the gas storage unit; an ice storage tank heat-exchanging purified water provided through the water flow line with iced water to allow cold water to be discharged; and a mixture tank allowing the cold water which has been cooled in the ice storage tank to be mixed with the gas received through the gas flow line.

The mixture tank may be installed in a state of being submerged (or dipped) in the iced water accommodated in the interior of the ice storage tank.

An evaporator for cooling iced water accommodated in the interior of the ice storage tank is provided in an upper portion of the interior of the ice storage tank, a purified water heat exchanger serving as a flow path of purified water supplied through the water flow line is provided in a lower portion of the ice storage tank, and purified water of the purified water heat exchanger may be cooled as the iced water accommodated in the interior of the ice storage tank is brought into contact with the purified water heat exchanger.

The ice storage tank may include a stirrer device stirring the iced water accommodated in the interior of the ice storage tank.

The water purifier may further include a controller driving the stirrer device when cold water is supplied to the interior of the mixture tank or when cold water is extracted therefrom.

The water flow line may be bifurcated to allow supplied purified water to flow to the purified water heat exchanger or to an external outflow member.

The ice storage tank may include an ice sensor for sensing a maximum frozen ice section and a minimum frozen ice section formed in the interior of the ice storage tank.

A cold water flow line as a flow path of cold water which has passed through the purified water heat exchanger may be bifurcated to allow cold water to flow to the mixture tank or to be discharged to the external outflow member.

The water flow line may include a flow sensor measuring the quantity of supplied water.

The water purifier may further include: a vent line connected to the mixture tank and discharging gas from the interior of the mixture tank; and a vent valve opening and closing the vent line.

An inflow amount of cold water and gas introduced into the mixture tank may be controlled by a switching valve.

The gas storage unit may include at least one of a carbonic acid gas cylinder and an oxygen cylinder.

The water purifier may further include an iced water supply line bifurcated from the water flow line and connected to the ice storage tank to supply purified water to the ice storage tank.

The ice storage tank may include a flotation device in order to control the quantity of water introduced into the ice storage tank.

A method for controlling a water purifier includes: discharging non-dissolved functional gas from the interior of a mixture tank through a vent line; supplying purified water to the mixture tank through a water flow line; and supplying functional gas to the mixture tank through a gas flow line to allow the gas to be dissolved in the purified water to thus generate functional water.

After the operation of supplying purified water to the mixture tank is completed, the functional gas may be supplied to the mixture tank.

In the supplying of the purified water to the mixture tank, purified water, cooled while flowing in the interior of the purified water heat exchanger provided in the interior of the ice storage tank, may be supplied to the mixture tank.

When the operation of supplying cooled purified water to the mixture tank is performed or when cooled purified water is extracted through an extraction unit, a stirrer device installed to stir iced water in the interior of the ice storage tank may be driven.

### BRIEF DESCRIPTION OF THE DRAWINGS

The above and other aspects, features and advantages of the present invention will be more clearly understood from the following detailed description taken in conjunction with the accompanying drawings, in which:
FIG. 1 is a schematic view illustrating a water purifier according to a first exemplary embodiment of the present invention;
FIG. 2 is a schematic perspective view of an ice storage tank of FIG. 1;
FIG. 3 is a schematic plan view of ice grown from an evaporator of the water purifier of FIG. 1 and an ice sensor for measuring the growth of ice;
FIG. 4 is a flow chart illustrating the process of a method for controlling a water purifier according to an exemplary embodiment of the present invention;
FIG. 5 is a schematic view illustrating a water purifier according to a second exemplary embodiment of the present invention;
FIG. 6 is a schematic view illustrating a water purifier according to a third exemplary embodiment of the present invention;
FIG. 7 is a schematic view illustrating a water purifier according to a fourth exemplary embodiment of the present invention; and
FIG. 8 is a sectional view of a flotation device of the water purifier of FIG. 7.

The description of reference numerals of the main elements in drawings :
10 filter system
20 carbonic acid gas cylinder
40 mixture tank
45 vent line
48 vent valve
50 ice storage tank (or an ice thermal storage tank)
60 ice sensor
70 stirrer device

### DETAILED DESCRIPTION OF THE PREFERRED EMBODIMENT

Exemplary embodiments of the present invention will now be described in detail with reference to the accompanying drawings. The invention may, however, be embodied in many different forms and should not be construed as being limited to the embodiments set forth herein. Rather, these embodiments are provided so that this disclosure will be thorough and complete, and will fully convey the scope of the invention to those skilled in the art. In the drawings, the shapes and dimensions may be exaggerated for clarity, and the same reference numerals will be used throughout to designate the same or like components.

A water purifier according to an exemplary embodiment of the present invention will be described in detail.

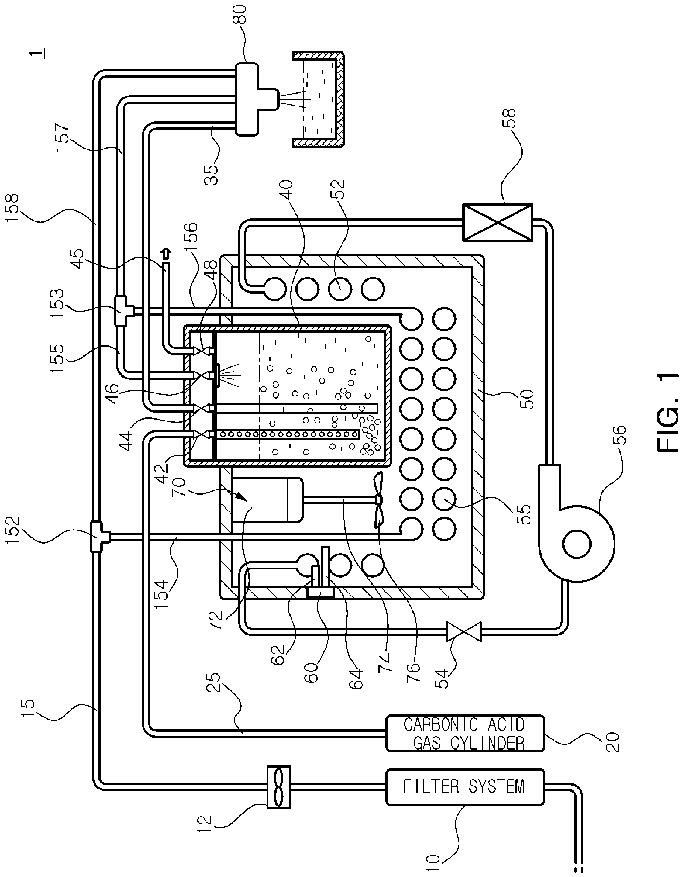

The water purifier according to an exemplary embodiment of the present invention is a functional water purifier capable of providing purified water containing a functional gas such as carbonic acid gas, oxygen, or the like, namely, capable of providing drinkable functional water such as carbonated water, oxygenized water, and the like. Functional water includes various types of water such as carbonated water, oxygenized water, and the like, and hereinafter, a water purifier capable of generating carbonated water will be described with reference to FIGS. 1 to 4.

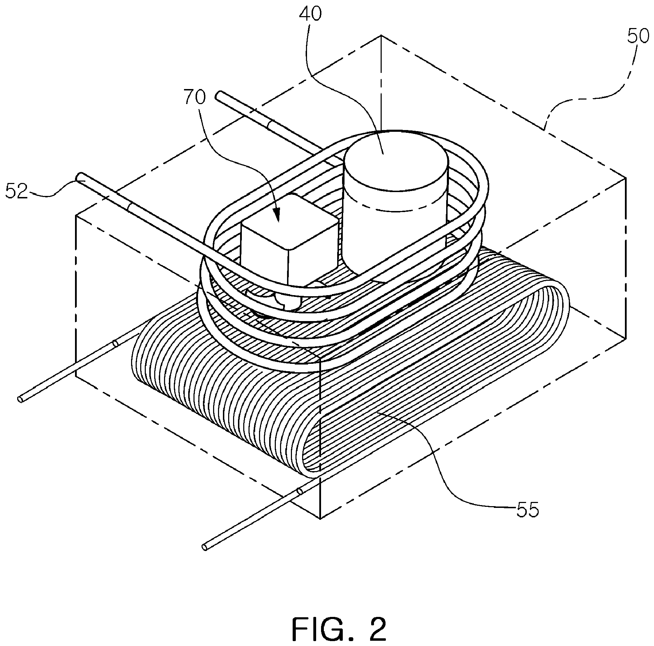

FIG. 1 is a schematic view illustrating a water purifier according to a first exemplary embodiment of the present invention, and FIG. 2 is a schematic perspective view of an ice storage tank of FIG. 1.

With reference to FIGS. 1 and 2, a water purifier 1 capable of generating carbonated water according to an exemplary embodiment of the present invention includes a water flow line (or a water movement line) 15 allowing purified water to flow or move therethrough; a gas storage unit configured as a carbonic acid gas cylinder 20 storing carbonic acid gas at above a certain pressure; a gas flow line (or a gas movement line) 25 allowing the gas to flow from the carbonic acid gas cylinder 20, an ice storage tank (or an ice thermal storage tank) 50 heat-exchanging purified water provided through the water flow line 15 with iced water to allow cold water to be discharged, and a mixture tank 40 mixing the cold water discharged from the ice storage tank 50 with the carbonic acid gas received through the gas flow line 25 to generate functional water, namely, carbonated water.

The water flow line 15 is a flow path along which raw water (or source water) provided from an external water source (not shown) flows after being filtered through a filter system 10. The water flow line 15 includes a purified water inflow line 154 and a purified water outflow line 158 bifurcated by a 3-way valve 152. The purified water inflow line 154 is connected to a purified water heat exchanger 55 installed in the interior of the ice storage tank 50, and the purified water outflow line 158 is connected to an outflow unit 80.

Accordingly, when the 3-way valve 152 is controlled, purified water in the water flow line 15 is supplied to the purified water heat exchanger 55 within the ice storage tank 50 through the purified water inflow line 154, or to the outflow unit 80 through the purified water outflow line 158.

The quantity of purified water provided through the filter system 10 is measured by a flow sensor 12 on the water flow line 15, and the quantity of purified water introduced into the mixture tank 40 can be calculated by subtracting the quantity of the purified water flowing outwardly to the external outflow unit 80 from the quantity of the introduced purified water. In this case, since the quantity of cold water introduced into the mixture tank 40 is measured by the flow sensor 12, no additional sensor or mechanism needs to be installed in the interior of the mixture tank 40, preventing a sensor or a mechanism from becoming corroded and easily adjusting a water level in the mixture tank 40.

The gas flow line 25 is a flow path along which the carbonic acid gas stored in the gas storage unit such as the carbonic acid gas cylinder 20 flows to the mixture tank 40. In this case, the gas flow line 25 extends up to a position in the mixture tank 40 in which water is put, so carbonic acid gas can have sufficient contact with water inserted into the interior of the mixture tank 40, increasing the solubility of the carbonic acid gas.

The carbonic acid gas cylinder 20, provided as an example of the gas storage unit, is a container accommodating high pressure carbonic acid gas therein. The high pressure carbonic acid gas in the interior of the carbonic acid gas cylinder 20 is supplied to the interior of the mixture tank 40 according to whether or not a switching valve 42 is open.

The ice storage tank 50 heat-exchanges iced water accommodated in the interior of the ice storage tank 50 and cooled by a cooling system with purified water flowing in the interior of the purified water heat exchanger 55 in communication with the purified water inflow line 154 to take heat from the purified water in the interior of the purified water heat exchanger 55 to make it cold water.

In order to maintain the iced water at a temperature sufficient for freezing the iced water, the iced water is cooled by the cooling system. The cooling system for cooling the iced water may include a compressor 56 for compressing a refrigerant, a condenser 58 for condensing the refrigerant which has been compressed by the compressor 56, an evaporator 52 for evaporating the refrigerant which has been condensed by the condenser 58, and an expander 54 for expanding the refrigerant which has been evaporated by the evaporator 52.

The evaporator 52 is provided in an upper portion of the interior of the ice storage tank 50 to cool iced water within the ice storage tank 50. In particular, the evaporator 52 freezes the iced water in the vicinity of the evaporator 52. Here, the purified water heat exchanger 55, serving as a purified water movement passage, is disposed on a lower side of the evaporator 52. Preferably, the purified water heat exchanger 55 is configured to be bent in a zigzag manner several times to perform sufficient heat exchanging with the iced water.

Since the purified water heat exchanger 55 is installed at the lower side of the evaporator 52, ice can be generated only in the vicinity of the evaporator 52 installed at the upper side of the ice storage tank 40 due to a convection current according to the specific gravity of iced water and the difference in temperature distribution, so the purifying heat exchanger installed at the lower side of the ice storage tank can be prevented from becoming frozen and bursting.

Also, since purified water, passing through the ice storage tank 50, is cooled and supplied to the outflow unit 80 or the mixture tank 40, cold water (purified cold water) and functional cold water such as cold carbonated water or oxygenized water can be supplied.

The functional water purifier 1 according to an exemplary embodiment of the present invention may include a stirrer device 70 for stirring iced water accommodated in the interior of the ice storage tank 40 to perform sufficient heat exchanging.

The stirrer device 70 includes a rotary motor 72 for rotating a stirrer shaft 74 connected to a stirrer fan 76, and according to the rotation, sufficient heat exchanging can be performed between iced water and the purified water heat exchanger 55 and between water having a high temperature and water having a low temperature.

Also, the driving of the stirrer device 70 can be controlled by a controller such that it can be driven only when cold water is in use, such as when cold water is extracted from or supplied to the mixture tank 40, namely, when purified water is introduced into the purified water heat exchanger 55 through the purified water inflow line 154. In this manner, since the stirrer device 70 is used only when cold water is used, sufficient heat exchanging can be achieved in a timely manner (namely, at a point in when heat exchanging is required) and energy can be saved.

The purified water (cold water) cooled after passing through the purified water heat exchanger 55 flows through a cold water flow line 156. In this case, the cold water in the coldwater flow line 156 may be introduced into the mixture tank 40 through the cold water inflow line 155 or may be discharged to the outflow unit 80 by way of a cold water outflow line 157.

An iced water supply line (not shown) may be connected to the ice storage tank 50 in order to supply iced water to or supplement iced water in the interior of the ice storage tank 50. Also, a water level detection unit, such as a water level sensor or a floatation device, may be installed to adjust a water level in the interior of the ice storage tank 50.

In the mixture tank 40, cold water and carbonic acid gas respectively introduced through the cold water inflow line 155 and the gas inflow line 25 are mixed to generate carbonated water.

As shown in FIG. 1, at least a portion of the mixture tank 40 is submerged in iced water accommodated in the interior of the ice storage tank 50. In this manner, since the mixture tank 40 is provided in the interior of the ice storage tank 50, cold water and cold functional water (cold carbonated water) can be provided through the single cooling system, and since an outer surface of the mixture tank 40 is heat-exchanged with the iced water, the functional water within the mixture water 40 can be maintained at a low temperature. In order to ensure sufficient heat exchanging between the mixture tank 40 and the iced water, the mixture tank 40 may be made of a metallic material having a high level of heat conductivity.

In addition, the functional water purifier 1 according to an exemplary embodiment of the present invention uses the ice storage tank 50, a large quantity of cold water and cold functional water at a low temperature can be extracted and a low temperature can be advantageously maintained in the interior of the mixture tank 40 accommodated within the ice storage tank 50. Namely, the ice storage tank 50 uses latent heat resulting from a change in the phase of water in a liquid state and ice in a solid state, it can sufficiently store cold heat, restraining the temperature of the iced water from increasing when the purified water heat exchanger 55 and the iced water are heat-exchanged, and accordingly, a large quantity of purified water can be changed into cold water at a low temperature. In particular, as discussed above, since the stirrer device 70 is provided in the ice storage tank 50, when heat exchanging is required, e.g., when cold water is supplied, the stirrer device 70 may be driven to sufficiently perform heat-exchanging in the interior of the ice storage tank 50, thereby providing a large quantity of cold water at a temperature lower than a predetermined temperature.

In the functional water purifier 1 according to an exemplary embodiment of the present invention, purified water, cold water, and carbonated water are selectively dispensed through the purified water outflow line 158, the cold water outflow line 157, and the carbonated water outflow line 35 according to a user's selection.

In this case, the carbonated water is generated when cold water and carbonic acid gas are introduced into the interior of the mixture tank 40 as the switching valves 46 and 42 of the cold water inflow line 155 and the gas flow line 25 are open.

Meanwhile, when a carbonated water is extracted in an amount more than a predetermined quantity, a process of regenerating carbonated water is required. In this case, the residual pressure of non-dissolved carbonic acid gas, which is too strong to allow cold water provided from the exterior to be directly introduced, remains in the mixture tank 40.

Thus, in order to discharge such non-dissolved carbonic acid gas, a vent line 45 may be connected to the mixture tank 40, and a vent valve 48 may be coupled to a suction end of the vent line 45.

When carbonated water is required to be regenerated, the controller (not shown) discharges the non-dissolved carbonic acid gas in the mixture tank 40 to the outside through the vent line 45, to significantly lower the internal pressure of the mixture tank 40. In this case, the internal pressure of the mixture tank 40 is lowered to be similar to air pressure, so cold purified water can be smoothly introduced into the mixture tank 40 through the purified water inflow line 154. Also, since the gas pressure of the carbonic acid gas cylinder 20 is remarkably high compared with that of the mixture tank 40, the carbonic acid gas of the carbonic acid gas cylinder 20 can be smoothly supplied to the mixture tank 40 by simply opening and closing the valve 42 without the necessity of a driving source.

Meanwhile, although not shown, the functional water purifier 1 may be configured such that a warm water line (not shown) is bifurcated from the purified water flow line 15 and an instant water heater (not shown) is installed on the hot water line (not shown), in order to provide hot water.

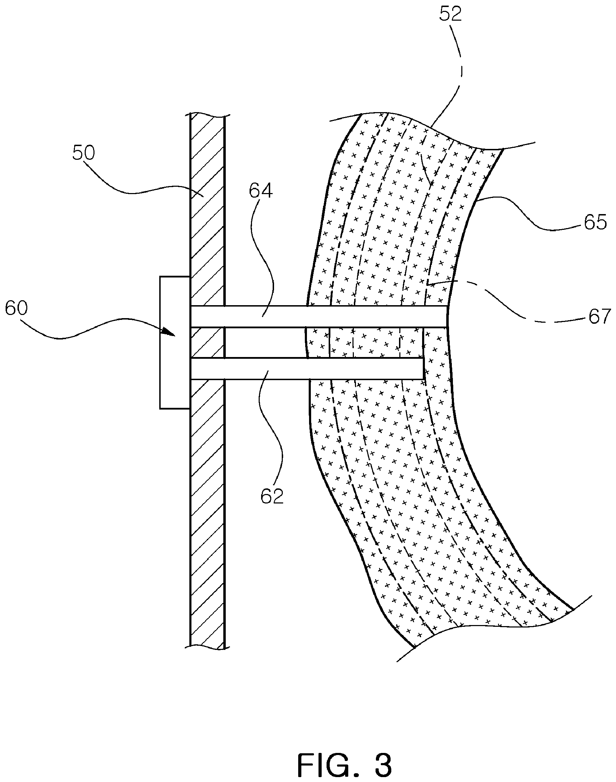

FIG. 3 is a schematic plan view of ice grown from an evaporator of the water purifier of FIG. 1 and an ice sensor for measuring the growth of ice.

With reference to FIG. 3, in the carbonated water purifier 1, in order to control the temperature of iced water within the ice storage tank 50, the amount of ice grown from the evaporator 52 for cooling iced water is measured by using an ice sensor 60.

Preferably, the cold water introduced into the mixture tank 40 is maintained at 4 degrees Celsius, and to this end, the refrigerant within the evaporator is maintained at below zero.

Thus, iced water near (i.e., at or in the vicinity of) the evaporator 52 is frozen, and as the temperature within the evaporator 52 is lowered, ice is grown from the evaporator 52.

The temperature of cold water introduced into the mixture tank 40 can be uniformly maintained by measuring the amount of ice grown from the evaporator 52 by using the ice sensor 60. The ice sensor 60 is configured to measure a pre-set minimum frozen ice section and a pre-set maximum frozen ice section. Namely, the ice sensor 60 may include a maximum frozen ice section measurement sensor 64 for measuring a maximum frozen ice section with the length of a maximum size of grown ice and a minimum frozen ice section measurement sensor 62 for measuring a minimum frozen ice section with the length of a maximum size of grown ice.

Namely, when ice has been grown to have a size equal to the maximum frozen ice section measurement sensor 64, the maximum frozen ice section measurement sensor 64 detects it and the controller (not shown) turns off the operation of the compressor 56 to stop a refrigerating cycle. Also, when ice is melted to have a size equal to the minimum frozen ice section measurement sensor 62, the minimum frozen ice section measurement sensor 62 detects it and the controller turns on the operation of the compressor 56 to operate the refrigerating cycle to lower the temperature of the refrigerant in the evaporator 52.

In this manner, since the ice sensor 60 for sensing the thickness of ice in the interior of the ice storage tank 50 is provided, the internal temperature of the ice storage tank 50 can be easily and stably controlled.

A method for controlling the carbonated water purifier according to an exemplary embodiment of the present invention configured as described above will now be described.

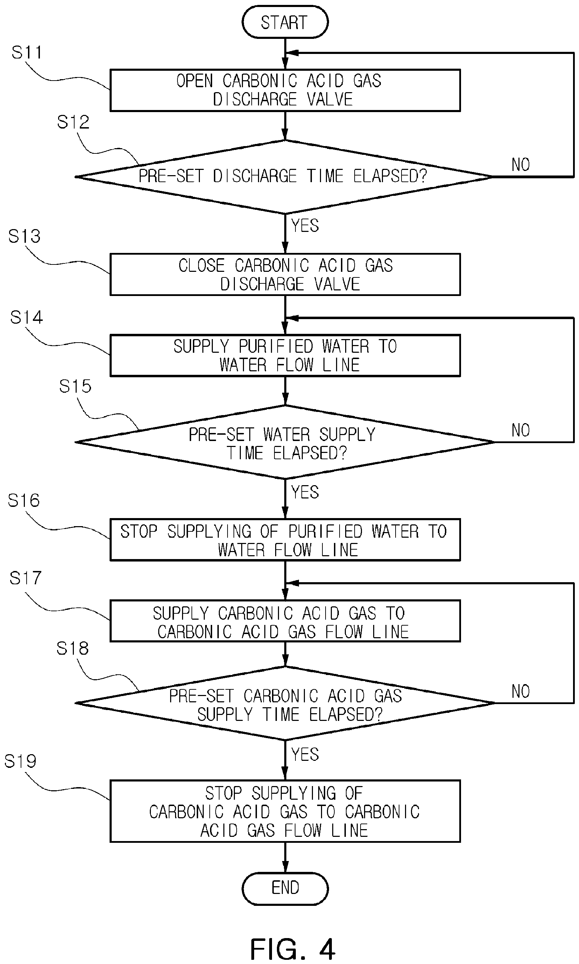

FIG. 4 is a flow chart illustrating the process of a method for controlling a water purifier according to an exemplary embodiment of the present invention.

With reference to FIG. 4, when carbonated water starts to be made, the vent valve 48 of the vent line 45 is open. At this time, non-dissolved carbonic acid gas in the interior of the mixture tank 40 is discharged to the outside through the vent line 45.

Then, the interior of the mixture tank 40 has pressure significantly lower than that before the carbonic acid gas was discharged.

When the controller determines that the vent valve 48 has been open for a pre-set discharge time (step S12), the controller closes the vent valve 48 to hermetically seal the interior of the mixture tank 40 (step S13).

Also, the controller controls the 3-way valve 152 of the water flow line 15 to allow purified water in the water flow line 15 to be introduced into the purified water inflow line 154. The purified water in the purified water inflow line 154 is cooled while passing through the purified water heat exchanger 55 of the ice storage tank 50. Also, cold water in the purified water inflow line 154 is supplied to the cold water inflow line 155 and then to the interior of the mixture tank 40 under the control of the 3-way valve 153. At this time, the switching valve 46 of the cold water inflow line 155 is open.

At this time, the interior of the mixture tank 40 has pressure which has been lowered according to the discharging of the carbonic acid gas, and therefore, cold water can be smoothly supplied to the mixture tank 40.

When the controller determines that the switching valve 46 of the cold water inflow line 155 has been open for a pre-set water supply time, the controller closes the switching valve 46 of the cold water inflow line 155 and stops supplying of purified water to the water flow line 15 (step S16). Alternatively, the opening and closing of the switching valve 46 may be controlled according to the level of water sensed by the flotation device or the water level detection sensor installed in the interior of the mixture tank 40.

After the supplying of cold water to the mixture tank 40 is completed, carbonic acid gas is supplied to the gas flow line 25 (step S17). The switching valve 42 of the gas flow line 25 is open. In this manner, carbonic acid gas is supplied after the supplying of cold water to the mixture tank 40 is completed, namely, after the switching valve 46 is closed, the carbonic acid gas supplied to the mixture tank 40 can be prevented from being introduced into the cold water inflow line 155.

In this case, the internal pressure of the mixture tank 40 is significantly low compared with that of the carbonic acid gas cylinder 20, the carbonic acid gas is introduced into the mixture tank 40 according to the difference between the internal pressures of the carbonic acid gas cylinder 20 and the mixture tank 40. Thus, in this manner, the carbonic acid gas can be supplied to the mixture tank 40 by simply opening only the switching valve 42 without the necessity of a driving source.

When the controller determines that the switching valve 42 of the gas flow line 25 has been open for a pre-set carbonic acid gas supply time (step S18), the controller closes the switching valve 42 of the gas flow line 25. Accordingly, the supplying of the carbonic acid gas to the interior of the mixture tank 40 is stopped (step S19).

The carbonic acid gas and cold water are dissolved in the interior of the mixture tank 40 to generate carbonated water. In this case, cold water and carbonic acid gas are supplied to the mixture tank 40 in a state in which non-dissolved carbonic acid gas remaining in the interior of the mixture tank 40 is first charged so the internal gas of the mixture tank 40 is low, a sufficient amount of cold water and carbonic acid gas can be introduced into the mixture tank 40. Accordingly, the solubility of the carbonic acid of the carbonated water can be increased to generate functional water having sufficient performance.

Also, in the functional water purifier 1 according to an exemplary embodiment of the present invention, since functional gas can be easily introduced into the interior of the mixture tank 40, a driving source, such as a high pressure pump, or the like, for injecting the functional gas is not required, and a sufficient amount of the functional gas can be supplied to the interior of the mixture tank 40 only with the gas storage unit (i.e., the gas cylinder storing a high pressure functional gas. Also, since an additional driving source, such as the high pressure pump, or the like, is not required, the mixture tank 40, the gas flow line 25, and cold water and purified water inflow lines 155 and 154 can be designed to have a relatively low pressure, improving stability and economic efficiency.

A water purifier according to a second exemplary embodiment of the present invention will now be described.

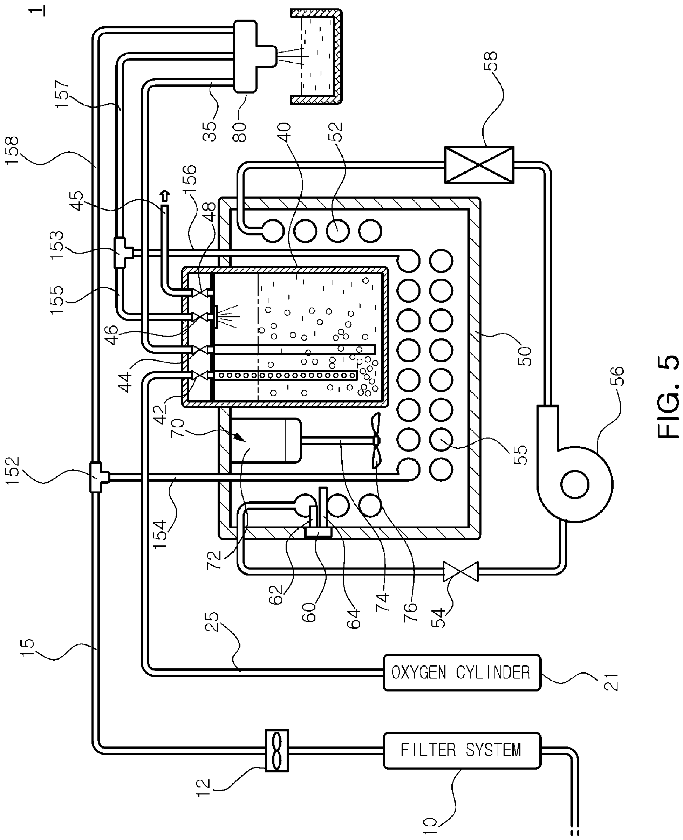

FIG. 5 is a schematic view illustrating a water purifier according to a second exemplary embodiment of the present invention.

With reference to FIG. 5, a water purifier according to the second exemplary embodiment of the present invention is a water purifier 1 capable of generating oxygenated water instead of carbonated water. An oxygen cylinder 21, storing high pressure oxygen, may be used as a gas storage unit of the water purifier 1. Accordingly, when oxygen and purified water (cold water) is supplied to the mixture tank 40, oxygenated water is generated as oxygen and purified water are mixed.

The water purifier 1 has the same configuration as that of the first exemplary embodiment of the present invention, except that the oxygen cylinder 21, instead of the carbonic acid gas cylinder, is used, and a method for mixing purified water and oxygen is also the same. Thus, a repeated description of the same parts as those of the first exemplary embodiment of the present invention will be omitted and the same reference numerals are used for the same elements.

A water purifier according to a third exemplary embodiment of the present invention will now be described.

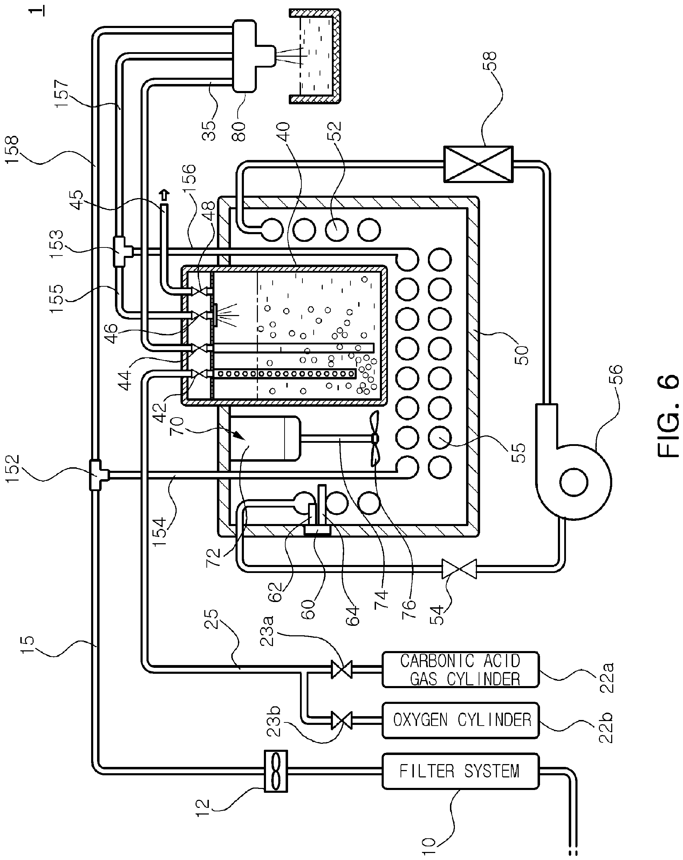

FIG. 6 is a schematic view illustrating a water purifier according to a third exemplary embodiment of the present invention.

With reference to FIG. 6, a water purifier according to the third exemplary embodiment of the present invention is a water purifier 1 capable of selectively generating carbonated water and oxygenated water. Gas storage units 22a and 22b include a carbonic acid gas cylinder 22a and an oxygen cylinder 22b. Switching valves 23a and 23b may be installed at discharge stages of the carbonic acid gas cylinder 22a and an oxygen cylinder 22b, respectively, in order to open and close a flow path.

Accordingly, in the water purifier 1, one of carbonic acid gas and oxygen according to a user selection and purified water (cold water) are supplied to the mixture tank 40, so carbonated water or oxygenated water is generated as the carbonic acid gas or oxygen is dissolved in the purified water.

The water purifier 1 has the same configuration as that of the first exemplary embodiment of the present invention, except for the carbonic acid gas cylinder 22a and the oxygen cylinder 22b, and a method for mixing purified water and oxygen is almost the same, except that carbonated water or oxygenated water is selectively provided according to a user's selection. Thus, a repeated description of the same parts in the third exemplary embodiment of the present invention as those of the first exemplary embodiment of the present invention will be omitted and the same reference numerals will be used for the same elements.

A water purifier according to a fourth exemplary embodiment of the present invention will now be described.

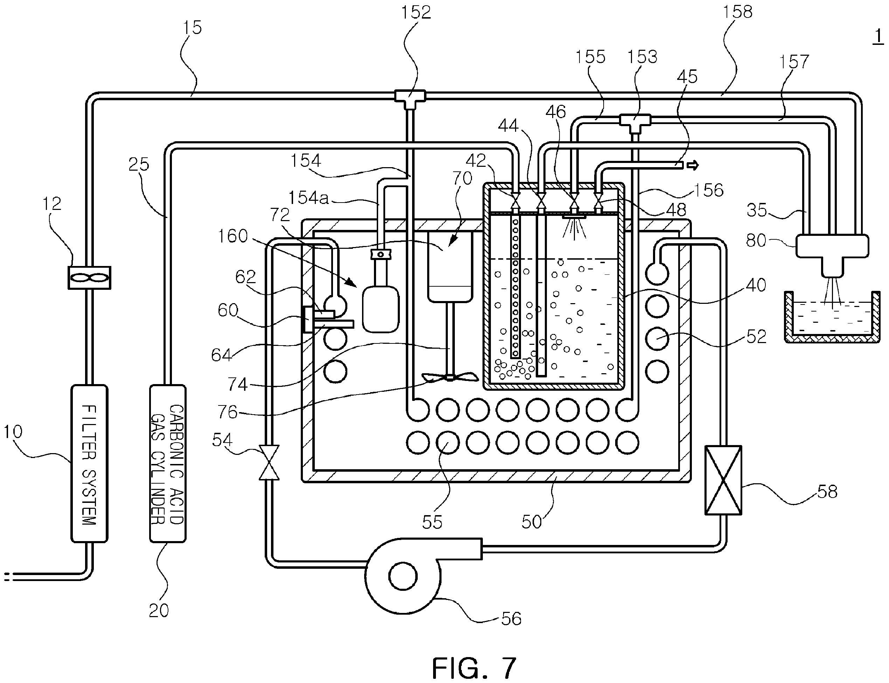

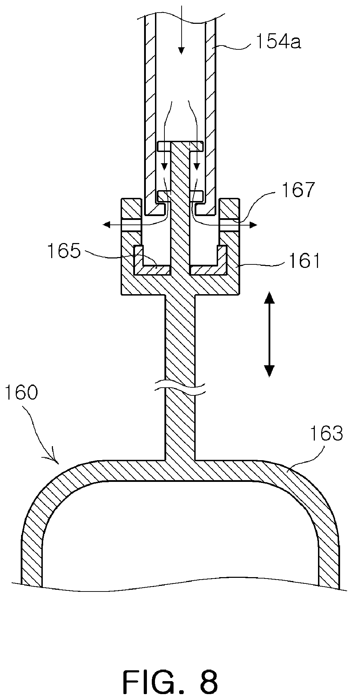

FIG. 7 is a schematic view illustrating a water purifier according to a fourth exemplary embodiment of the present invention, and FIG. 8 is a sectional view of a flotation device constituting the water purifier of FIG. 7.

With reference to FIGS. 7 and 8, the water purifier according to the fourth exemplary embodiment of the present invention may further include an iced water supply line 154a bifurcated from the water flow line 15 and connected to the ice storage tank 50. In this case, the iced water supply line 154a may be bifurcated from the purified water inflow line 154 of the water flow line 15 and connected to the ice storage tank 50.

The iced water supply line 154a supplies a portion of purified water supplied to the water flow line 15, simplifying the structure of piping. Also, an additional iced water supply source for supplying purified water to the ice storage tank 50 is not required to be installed.

Also, a flotation device 160 may be installed at the ice storage tank 50 in order to adjust the level of water within the ice storage tank 50. In this case, the flotation device 160 may include a flow path opening and closing unit 161 inserted into a discharge stage of the iced water supply line 154a such that the flow path opening and closing unit 161 can be lifted and lowered to open and close a flow path, and a buoyancy operation unit 163 connected to the flow path opening and closing unit 161 and lifting and lowering the flow path opening and closing unit 161 according to buoyancy.

The flow path opening and closing unit 161 may include a sealing member 165 to seal the discharge stage of the iced water supply line 154a when the flow path opening and closing unit 161 is lifted. In this case, the flow path opening and closing unit 161 is configured such that it is inserted into the discharge stage of the iced water supply line 154a when lifted. Also, the flow path opening and closing unit 161 may include a hole 167 to allow the iced water in the iced water supply line 154a to be introduced into the ice storage tank 50 when the flow path opening and closing unit 161 is lowered.

The flotation device 160 may have various other structures, without being limited to the structure illustrated in FIG. 8, so long as it opens and closes the iced water supply line 154a.

When the level of purified water is raised, the flotation device 160 is lifted by buoyancy to close the iced water supply line 154a, and when the level of purified water is lowered, the flotation device 160 opens the iced water supply line 154a. Accordingly, the water level in the interior of the ice storage tank 50 can be automatically maintained without having to install an opening and closing device for opening and closing the iced water supply line 154a.

The water purifier 1 according to the fourth exemplary embodiment of the present invention has the substantially same configuration as that of the first exemplary embodiment of the present invention, except for the iced water supply line 154a and the flotation device 160. Thus, a repeated description of the same parts in the fourth exemplary embodiment of the present invention as those of the first exemplary embodiment of the present invention will be omitted and the same reference numerals are used for the same elements. Also, one of the carbonated water cylinder and oxygenated water cylinder may be employed as the gas storage unit or both of them may be simultaneously employed in the fourth exemplary embodiment of the present invention.

As described above, as drinkable functional water can be generated by mixing purified water and functional gas without using any additional driving source, the present invention has a remarkable industrial applicability.

As set forth above, according to exemplary embodiments of the invention, since purified water, passing through an ice storage tank, is cooled to supply cold water to the outflow unit or the mixture tank, cold functional water such as cold carbonated water or cold oxygenized water as well as cold water (cold purified water) can be simultaneously supplied.

In addition, since the mixture tank is provided in the interior of the ice storage tank, cold water and cold functional water can be provided through a single cooling system and the mixture tank can be stably maintained at a low temperature.

In addition, since the latent heat of water is used, the ice storage tank which sufficiently retains cold can be provided to thus stably supply a large quantity of cold water of below a certain temperature (namely, cold water having temperature lower than a predetermined temperature). In particular, since the stirrer device is provided in the interior of the ice storage tank, when the time for heat exchange arrives, namely, when cold water is to be supplied, the stirrer device can be driven to sufficiently perform heat exchanging in the interior of the ice storage tank, thus providing a large quantity of cold water of below a certain temperature.

In addition, since the evaporator of the cooling system is installed in an upper portion of the interior of the ice storage tank and the purifying heat exchanger is installed in a lower portion of the interior of the ice storage tank, ice can be generated in the vicinity of the evaporator installed at the upper portion of the ice storage tank due to a convection current according to the specific gravity of iced water and the difference in temperature distributions, the purifying heat exchanger installed at the lower side of the ice storage tank can be prevented from being frozen and burst.

In addition, since the ice sensor for sensing the thickness of ice in the interior of the ice storage tank is provided, the temperature in the interior of the ice storage tank can be easily and stably controlled.

In addition, flow paths of a water flow line, a cold water flow line, an iced water supply line are appropriately selected and determined, facilitating a piping structure and installation.

In addition, when functional gas and cold water are supplied to the interior of the mixture tank to generate functional water, functional gas remaining in the interior of the mixture tank can be discharged to the outside to lower the internal pressure of the mixture tank, thus facilitating an inflow of the functional gas and cold water. Namely, since the functional gas can easily flow into the mixture tank, a driving source, such as a high pressure pump, or the like, is not required to inject the functional gas, and a sufficient amount of functional gas can be supplied to the interior of the mixture tank only with a gas storage unit (a gas cylinder) storing the functional gas at a high pressure. Accordingly, since any additional driving source, such as a high pressure pump, or the like, is not required, the mixture tank, the gas flow line, and the like, can be designed to have a relatively low pressure, improving stability and economic efficiency.

While the present invention has been shown and described in connection with the exemplary embodiments, it will be apparent to those skilled in the art that modifications and variations can be made without departing from the scope of the invention as defined by the appended claims.

## Claims

1. A water purifier comprising:
a water flow line (15) allowing purified water to move therethrough;
a gas storage unit (20, 21, 22a, 22b) allowing gas to be stored;
a gas flow line (25) allowing the gas to flow from the gas storage unit;
an ice storage tank (50) heat-exchanging purified water provided through the water flow line (15) with iced water to allow cold water to be discharged; and
a mixture tank (40) allowing the cold water which has been cooled in the ice storage tank (50) to be mixed with the gas received through the gas flow line,
**characterized in that** an evaporator (52) for cooling iced water accommodated in the interior of the ice storage tank (50) is provided in an upper portion of the interior of the ice storage tank (50), a purified water heat exchanger (55) serving as a flow path of purified water supplied through the water flow line (15) is provided in a lower portion of the interior of the ice storage tank (50), the evaporator (52) is disposed above the purified water heat exchanger (55) so that the evaporator (52) is spaced apart from the purified water heat exchanger (55), and purified water of the purified water heat exchanger (55) is cooled as the iced water accommodated in the interior of the ice storage tank (50) is brought into contact with the purified water heat exchanger (55).

2. The water purifier of claim 1, wherein the mixture tank (40) is installed in a state of being submerged in the iced water accommodated in the interior of the ice storage tank (50).

3. The water purifier of claim 1, wherein the ice storage tank (50) comprises a stirrer device (70) stirring the iced water accommodated in the interior of the ice storage tank (50).

4. The water purifier of claim 3, further comprising:
a controller driving the stirrer device when cold water is supplied to the interior of the mixture tank (40) or when cold water is extracted therefrom.

5. The water purifier of claim 1, wherein the ice storage tank (50) comprises an ice sensor (60) for sensing a maximum frozen ice section and a minimum frozen ice section of ice formed in the interior of the ice storage tank (50).

6. The water purifier of claim 1, wherein a cold water flow line (156) as a flow path of cold water which has passed through the purified water heat exchanger (55) is bifurcated to allow cold water to flow to the mixture tank (40) or to be discharged to the external outflow member (80).

7. The water purifier of claim 1 or 2, further comprising:
a vent line (45) connected to the mixture tank (40) and discharging gas from the interior of the mixture tank (40); and
a vent valve (48) opening and closing the vent line (45).

8. The water purifier of claim 1 or 2, wherein an inflow amount of cold water and gas introduced into the mixture tank (40) is controlled by a switching valve (42, 46).

9. The water purifier of claim 1 or 2, wherein the gas storage unit (20, 21, 22a, 22b) comprises at least one of a carbonic acid gas cylinder and an oxygen cylinder.

10. The water purifier of claim 1 or 2, further comprising:
an iced water supply line bifurcated from the water flow line (15) and connected to the ice storage tank (50) to supply purified water to the ice storage tank (50).

## Patentansprüche

1. Wasserreiniger, der Folgendes umfasst:
eine Wasserdurchflussleitung (15), durch die sich gereinigtes Wasser bewegen kann;
eine Gasspeichereinheit (20, 21, 22a, 22b), die Gas speichern kann;
eine Gasdurchflussleitung (25), durch die das Gas aus der Gasspeichereinheit fließen kann:
einen Eisspeicherbehälter (50), der zwischen dem gereinigten Wasser, das durch die Wasserdurchflussleitung (15) bereitgestellt wird, und Eiswasser Wärme austauscht, damit kaltes Wasser ausgelassen werden kann; und
einen Mischbehälter (40), mit dem kaltes Wasser, das in dem Eisspeicherbehälter (50) gekühlt worden ist, mit dem durch die Gasdurchflussleitung empfangenen Gas vermischt werden kann,
**dadurch gekennzeichnet, dass** ein Verdampfer (52) zum Kühlen von Eiswasser, der im Inneren des Eisspeicherbehälters (50) untergebracht ist, in einem oberen Abschnitt des Inneren des Eisspeicherbehälters (50) vorgesehen ist, ein Wärmetauscher (55) für gereinigtes Wasser, der als Durchflussweg für das gereinigte Wasser, das durch die Wasserdurchflussleitung (15) zugeführt wird, dient, in einem unteren Abschnitt des Inneren des Eisspeicherbehälters (50) vorgesehen ist, der Verdampfer (52) über dem Wärmetauscher (55) für gereinigtes Wasser derart angeordnet ist, dass der Verdampfer (52) von dem Wärmetauscher (55) für gereinigtes Wasser beabstandet ist, und gereinigtes Wasser des Wärmetauschers (55) für gereinigtes Wasser gekühlt wird, wenn das Eiswasser, das im Inneren des Eisspeicherbehälters (50) untergebracht ist, in Kontakt mit dem Wärmetauscher (55) für gereinigtes Wasser gebracht wird.

2. Wasserreiniger nach Anspruch 1, wobei der Mischbehälter (40) in einem Zustand, in dem er in das Eiswasser eingetaucht ist, das im Inneren des Eisspeicherbehälters (50) untergebracht ist, installiert ist.

3. Wasserreiniger nach Anspruch 1, wobei der Eisspeicherbehälter (50) eine Rührvorrichtung (70) umfasst, die das Eiswasser, das im Inneren des Eisspeicherbehälters (50) untergebracht ist, umrührt.

4. Wasserreiniger nach Anspruch 3, der ferner Folgendes umfasst:
eine Steuereinrichtung, die die Rührvorrichtung antreibt, wenn dem Inneren des Mischtanks (40) kaltes Wasser zugeführt wird, oder wenn kaltes Wasser daraus extrahiert wird.

5. Wasserreiniger nach Anspruch 1, wobei der Eisspeicherbehälter (50) einen Eissensor (60) zum Erfassen eines maximal gefrorenen Eisabschnitts und eines minimal gefrorenen Eisabschnitts des im Inneren des Eisspeicherbehälters (50) gebildeten Eises umfasst.

6. Wasserreiniger nach Anspruch 1, wobei sich eine Kaltwasserdurchflussleitung (156) als ein Durchflussweg von kaltem Wasser, das durch den Wärmetauscher (55) für gereinigtes Wasser gelaufen ist, verzweigt, damit kaltes Wasser zu dem Mischbehälter (40) fließen oder in das äußere Abflusselement (80) ausgelassen werden kann.

7. Wasserreiniger nach Anspruch 1 oder 2, der ferner Folgendes umfasst:
eine Belüftungsleitung (45), die mit dem Mischtank (40) verbunden ist und Gas aus dem Inneren des Mischtanks (40) ausstößt; und
ein Belüftungsventil (48), das die Belüftungsleitung (45) öffnet und schließt.

8. Wasserreiniger nach Anspruch 1 oder 2, wobei eine Zulaufmenge von kaltem Wasser und Gas, die in den Mischtank (40) eingeleitet werden, von einem Schaltventil (42, 46) gesteuert wird.

9. Wasserreiniger nach Anspruch 1 oder 2, wobei die Gasspeichereinheit (20, 21, 22a, 22b) einen Kohlensäuregaszylinder und/oder einen Sauerstoffzylinder umfasst.

10. Wasserreiniger nach Anspruch 1 oder 2, der ferner Folgendes umfasst:
eine Eiswasserzuführleitung, die von der Wasserdurchflussleitung (15) abzweigt und mit dem Eisspeicherbehälter (50) verbunden ist, um dem Eisspeicherbehälter (50) gereinigtes Wasser zuzuführen.

## Revendications

1. Purificateur d'eau comprenant :
une ligne d'écoulement d'eau (15) permettant à l'eau purifiée de s'écouler à travers celle-ci ;
une unité de stockage de gaz (20, 21, 22a, 22b) permettant de stocker du gaz ;
une ligne d'écoulement de gaz (25) permettant au gaz de s'écouler à partir de l'unité de stockage de gaz ;
un réservoir de stockage de glace (50) échangeant de la chaleur avec l'eau purifiée, disposé à travers la ligne d'écoulement d'eau (15) avec de l'eau glacée afin d'évacuer de l'eau froide ; et
un réservoir de mélange (40) permettant de mélanger l'eau froide qui a été refroidie dans le réservoir de stockage de glace (50) avec le gaz provenant de la ligne d'écoulement de gaz,
**caractérisé en ce qu'**un évaporateur (52) permettant de refroidir l'eau glacée logée à l'intérieur du réservoir de stockage de glace (50) est prévu dans une portion supérieure de l'intérieur du réservoir de stockage de glace (50), un échangeur thermique d'eau purifiée (55) servant de chemin d'écoulement pour l'eau purifiée alimentée à travers la ligne d'écoulement d'eau (15) est prévu dans une portion inférieure de l'intérieur du réservoir de stockage de glace (50), l'évaporateur (52) étant disposé au-dessus de l'échangeur thermique d'eau purifiée (55) de façon à ce que l'évaporateur (52) soit espacé de l'échangeur thermique d'eau purifiée (55) et à ce que l'eau purifiée de l'échangeur thermique d'eau purifiée (55) soit refroidi lors que l'eau glacée logée à l'intérieur du réservoir de stockage de glace (50) est amené en contact avec l'échangeur thermique d'eau purifiée (55).

2. Purificateur d'eau selon la revendication 1, dans lequel le réservoir de mélange (40) est installée dans un état submergé dans l'eau glacée logée à l'intérieur du réservoir de stockage de glace (50).

3. Purificateur d'eau selon la revendication 1, dans lequel le réservoir de stockage de glace (50) comprend un dispositif agitateur (70) agitant l'eau glacée logée à l'intérieur du réservoir de stockage de glace (50).

4. Purificateur d'eau selon la revendication 3, comprenant en outre :
un contrôleur entraînant le dispositif agitateur lorsque de l'eau froide est introduite à l'intérieur du réservoir de mélange (40) ou lorsque de l'eau froide est prélevée dans celui-ci.

5. Purificateur d'eau selon la revendication 1, dans lequel le réservoir de stockage de glace (50) comprend un capteur de glace (60) permettant de détecter une section de glace gelée maximum et une section de glace gelée minimum à l'intérieur du réservoir de stockage de glace (50).

6. Purificateur d'eau selon la revendication 1, dans lequel une ligne d'écoulement d'eau (156), en tant que chemin d'écoulement de l'eau froide qui a traversé l'échangeur thermique de l'eau purifiée (55), bifurque afin de permettre à l'eau froide de s'écouler vers le réservoir de mélange (40) ou de l'évacuer vers l'élément d'évacuation externe (80).

7. Purificateur d'eau selon la revendication 1 ou 2, comprenant en outre :
une ligne de ventilation (45), connectée au réservoir de mélange (40) et évacuant le gaz provenant de l'intérieur du réservoir de mélange (40) ; et
une soupape de ventilation (48) ouvrant et fermant la ligne de ventilation (45).

8. Purificateur d'eau selon la revendication 1 ou 2, dans lequel un débit entrant d'eau froide et de gaz introduit dans le réservoir de mélange (40) est contrôlé par une vanne de commutation (42, 46).

9. Purificateur d'eau selon la revendication 1 ou 2, dans lequel l'unité de stockage de gaz (20, 21, 22a, 22b) comprend au moins un parmi un cylindre à acide carbonique et un cylindre à oxygène.

10. Purificateur d'eau selon la revendication 1 ou 2, comprenant en outre :
une ligne d'alimentation en eau glacée bifurquant à partir de la ligne d'écoulement d'eau (15) et connectée au réservoir de stockage de glace (50) afin d'introduire l'eau purifiée dans le réservoir de stockage de glace (50).
